# FASCICULE DE BREVET EUROPEEN

(11) **EP 2 889 271 B1**
(45) Date de publication et mention de la délivrance du brevet: **10.01.2018**
(21) Numéro de dépôt: 14200219.5
(22) Date de dépôt: 23.12.2014
(51) Int. Cl.: C01G 23/00, C01B 32/00

(54) **Procede de fabrication d'une poudre d'oxyde mixte d'yttrium et de titane**
Herstellungsverfahren eines Oxidpulvers gemischt mit Yttrium und Titan
Method for producing a powder of mixed oxide of yttrium and titanium

(30) Priorité: 27.12.2013 FR 1363665
(43) Date de publication de la demande: 01.07.2015
(73) Titulaire: Commissariat à l'Energie Atomique et aux Energies Alternatives, 75015 Paris (FR)
(72) Inventeur: Maskrot, Hicham, 91310 Montlhery (FR); Chaffron, Laurent, 91360 Villemoisson-Sur-Orge (FR)
(74) Mandataire: Dennemeyer & Associates S.A.

(56) Documents cités:
- CHEN Z S ET AL: "Synthesis and characterization of pyrochlore-type yttrium titanate nanoparticles by modified sol-gel method", BULLETIN OF MATERIALS SCIENCE, SPRINGER INDIA, NEW DELHI, vol. 34, no. 3, 2 septembre 2011 (2011-09-02), pages 429-434, XP035027371, ISSN: 0973-7669, DOI: 10.1007/S12034-011-0116-2
- HICHAM MASKROT ET AL: "Blue TiO{2 -x}/SiO2 nanoparticles by laser pyrolysis", JOURNAL OF NANOPARTICLE RESEARCH ; AN INTERDISCIPLINARY FORUM FOR NANOSCALE SCIENCE AND TECHNOLOGY, KLUWER ACADEMIC PUBLISHERS, DO, vol. 8, no. 3-4, 18 mai 2006 (2006-05-18), pages 351-360, XP019404305, ISSN: 1572-896X, DOI: 10.1007/S11051-005-9016-Y
- J. D. CASEY: "Laser-induced vapor-phase synthesis of titanium dioxide", JOURNAL OF MATERIALS SCIENCE, vol. 22, 1 janvier 1987 (1987-01-01), pages 4307-4312, XP009179964,
- ALEXANDRESCU R ET AL: "TiO2 nanosized powders by TiCl4 laser pyrolysis; TiO2 nanosized powders by TiCl4 laser pyrolysis", NANOTECHNOLOGY, IOP, BRISTOL, GB, vol. 15, no. 5, 17 février 2004 (2004-02-17), pages 537-545, XP020067938, ISSN: 0957-4484, DOI: 10.1088/0957-4484/15/5/023
- COUPE A ET AL: "Dispersion behaviour of laser-synthesized silicon carbide nanopowders in ethanol for electrophoretic infiltration", JOURNAL OF THE EUROPEAN CERAMIC SOCIETY, ELSEVIER SCIENCE PUBLISHERS, BARKING, ESSEX, GB, vol. 32, no. 14, 16 mai 2012 (2012-05-16), pages 3837-3850, XP028427003, ISSN: 0955-2219, DOI: 10.1016/J.JEURCERAMSOC.2012.05.022 [extrait le 2012-05-24]
- GARBOUT ET AL: "Synthesis, X-ray diffraction investigations and spectroscopic analysis of yttrium-substituted pyrochlore oxides Y2-2xBi2xTi2O7 via a sol-gel process", JOURNAL OF CRYSTAL GROWTH, ELSEVIER, AMSTERDAM, NL, vol. 307, no. 1, 25 août 2007 (2007-08-25) , pages 219-228, XP022214391, ISSN: 0022-0248, DOI: 10.1016/J.JCRYSGRO.2007.06.016

## Description

### DOMAINE TECHNIQUE

La présente invention appartient au domaine de la fabrication des poudres d'éléments métalliques.

L'invention concerne plus particulièrement un procédé de fabrication d'une poudre d'oxyde mixte d'yttrium et de titane.

### ARRIERE-PLAN TECHNIQUE

L'oxyde mixte d'yttrium et de titane Y₂Ti₂O₇ présente une structure pyrochlore de formule générale A₂B₂O₇. Sa conductivité ionique, ainsi que ses propriétés catalytiques et thermomécaniques militent en faveur de son utilisation dans diverses applications, notamment les piles à combustible, la photocatalyse et l'élaboration d'acier renforcé de type ODS.

Ces caractéristiques physico-chimiques avantageuses pourraient être renforcées si cet oxyde mixte était disponible sous forme d'une poudre avec des grains de taille réduite, en particulier d'une nanopoudre.

Or, même si les minéraux ternaires de structure pyrochlore existent à l'état naturel, ils ne peuvent être extraits en grande quantité, sont chimiquement impurs et ne se présentent pas sous forme de poudre à grains nanométriques.

Dès lors, diverses tentatives ont été menées afin de développer des procédés de fabrication de l'oxyde mixte Y₂Ti₂O₇ sous forme d'une poudre dans laquelle la taille des grains est la plus réduite possible.

De manière générale, ces procédés nécessitent le mélange d'un précurseur d'yttrium et d'un précurseur de titane suivi d'une cristallisation menant à l'oxyde mixte. Ils se subdivisent en fonction de l'état physico-chimique des précurseurs qui peuvent être mis en oeuvre sous forme liquide ou solide.

Dans la voie solide, des poudres de précurseurs tels que les oxydes Y₂O₃ et TiO₂ sont mélangées. Le mélange obtenu est traité thermiquement afin de favoriser la diffusion des éléments chimiques et la cristallisation de la phase pyrochlore. Le traitement thermique consiste en général en une succession de paliers de température supérieure à 1000 °C pendant quelques heures à quelques jours pour aboutir à l'oxyde mixte.

Dans la voie liquide, un procédé sol-gel est généralement utilisé dans lequel des précurseurs constitués d'oxydes inorganiques à base d'yttrium et de titane sont mélangés afin de former une solution. Après hydrolyse et polymérisation des précurseurs, la solution se gélifie. Le gel obtenu est ensuite traité thermiquement. La cristallisation qui en résulte mène à l'obtention d'une poudre d'oxyde mixte.

Le traitement thermique de la voie liquide comprend des paliers de températures de nature similaire à ceux de la voie solide. Ces paliers sont toutefois moins nombreux et moins longs, ce qui rend la voie liquide moins énergivore et plus rapide que la voie solide.

Même si les voies solide et liquide présentent chacune des avantages et des inconvénients, elles ont en commun de ne pas conduire à l'obtention d'une poudre d'oxyde mixte présentant un bon degré de pureté, puisque la phase pyrochlore est associée à des phases secondaires telles que l'oxyde d'yttrium (Y₂O₃) ou le rutile (TiO₂). De plus, la poudre obtenue n'est pas constituée de grains de taille moyenne nanométrique à cause du traitement thermique de cristallisation qui provoque inévitablement une croissance des grains.

Les documents « Chen et al., Préparation of Y2Ti2O7 Nanocrystal by Sol-Gel Method and its Characterization, Advanced Materials Research, 2010, Vol. 97-101, p. 2175-2179 *»* [1] et « Chen et al., Synthesis and characterization of pyrochlore-type yttrium titanate nanoparticles by modified sol-gel method, Bulletin of Materials Science, 2011, Vol. 34, No. 3., p. 429-434 *»* [2] décrivent toutefois un procédé de voie liquide dans lequel une solution sol-gel obtenue en présence d'acide citrique est calcinée à 750 °C afin d'obtenir des grains d'oxyde mixte de structure pyrochlore Y₂Ti₂O₇. Les grains de l'oxyde Y₂Ti₂O₇ présentent une taille moyenne de 20 nm à 50 nm.

Un tel procédé présente l'inconvénient de ne pouvoir conduire à l'obtention de quantités importantes de poudre en vue d'une production à l'échelle industrielle.

### EXPOSE DE L'INVENTION

Un des buts de l'invention est donc d'éviter ou d'atténuer un ou plusieurs des inconvénients décrits ci-dessus, en proposant un procédé de fabrication conduisant à l'obtention de quantités importantes d'une poudre d'oxyde mixte d'yttrium et de titane présentant un bon degré de pureté.

La présente invention concerne ainsi un procédé de fabrication d'une poudre d'oxyde mixte d'yttrium et de titane, le procédé comprenant les étapes successives suivantes :
a) agitation d'une solution précurseur afin d'obtenir une solution sol-gel ; la solution précurseur comprenant un précurseur d'yttrium, un précurseur de titane et au moins un composé additionnel agissant en tant qu'absorbant d'un rayonnement laser et/ou solvant ; les précurseurs étant tels qu'au moins un d'entre eux contient l'élément oxygène et qu'ils sont présents dans la solution précurseur selon une concentration telle que le rapport molaire entre les éléments yttrium et titane correspond au rapport stoechiométrique de ces éléments dans la poudre d'oxyde mixte ;
b) pyrolyse laser de la solution sol-gel afin d'obtenir une poudre carbonée comprenant des grains d'oxyde mixte d'yttrium et de titane qui sont recouverts d'une couche de carbone ;
c) traitement thermique supplémentaire de la poudre carbonée dans une atmosphère oxydante vis-à-vis du carbone, afin de supprimer la couche de carbone et d'obtenir la poudre d'oxyde mixte.

Le procédé de fabrication de l'invention conduit à l'obtention d'une poudre d'oxyde mixte d'yttrium et de titane malgré l'utilisation d'une étape de pyrolyse laser. Cette poudre est en particulier une nanopoudre, à savoir une poudre dont les grains ont une taille moyenne comprise entre 10 nm et 80 nm.

Un tel résultat est inattendu, car il est bien connu que la pyrolyse laser d'un précurseur du titane, tel que le tétraisopropoxyde de titane, conduit à l'obtention de l'oxyde de titane TiO₂ recouvert d'une couche de carbone (noté « TiO₂/C »), comme indiqué par exemple dans le document « JD Casey et al.; Journal of Material Sciences, 1987, vol. 22, p. 4307-4312 » [3]. De manière similaire, on s'attend à ce que la pyrolyse laser d'un précurseur de l'yttrium aboutisse à de l'oxyde d'yttrium recouvert d'une couche de carbone (noté « Y₂O₃/C »).

En l'absence de tout diagramme de phase du système biphasique TiO₂/C + Y₂O₃/C qui permettrait de prévoir une évolution différente, la pyrolyse laser d'un mélange d'un précurseur du titane et d'un précurseur de l'yttrium doit donc logiquement conduire à l'obtention d'une poudre biphasique composée d'une phase TiO₂/C et d'une phase Y₂O₃/C.

Cette approche logique est confirmée par le document *«* Maskrot et al.; Blue TiO2-x/SiO2 nanoparticles by laser pyrolysis, Journal of Nanoparticle Research, 2006, vol. 8, n° 3-4, p. 351-360 *»* [4] : pour les éléments silicium et titane introduits selon un rapport molaire égal à 1 qui est pourtant celui de la structure pyrochlore, la pyrolyse laser conduit à des grains d'oxyde monophasiques composés d'une phase TiO₂ ou d'une phase SiO₂, voire des grains d'oxyde biphasiques composés d'une phase TiO₂ et d'une phase SiO₂. En aucun cas des grains d'oxyde mixte de structure complexe telle que la structure pyrochlore ne sont obtenus.

Par analogie, on s'attend donc à ce que l'utilisation de la pyrolyse laser pour les éléments yttrium et titane conduise à la formation, après suppression de la couche de carbone, d'une poudre biphasique dont les grains sont composés des deux phases oxydes Y₂O₃ et TiO₂, mais pas à la formation d'une poudre dont des grains ont une structure plus complexe dans laquelle les éléments yttrium et titane forment une solution solide comme celle de la structure pyrochlore.

Les inventeurs sont à leur connaissance les premiers à montrer que la pyrolyse laser d'une solution sol-gel permet contre toute attente d'obtenir un oxyde mixte d'yttrium et de titane sous forme d'une solution solide.

### EXPOSE DETAILLE DE L'INVENTION

Dans la présente description de l'invention, un verbe tel que « comprendre », « incorporer », « inclure », « composer » et ses formes conjuguées sont des termes ouverts et n'excluent donc pas la présence d'élément(s) et/ou étape(s) additionnels s'ajoutant aux élément(s) et/ou étape(s) initiaux énoncés après ces termes. Toutefois, ces termes ouverts visent en outre un mode de réalisation particulier dans lequel seul(s) le(s) élément(s) et/ou étape(s) initiaux, à l'exclusion de tout autre, sont visés ; auquel cas le terme ouvert vise en outre le terme fermé « consister en », « constituer de » et ses formes conjuguées.

Par ailleurs, sauf indication contraire, les valeurs aux bornes sont incluses dans les gammes de paramètres indiquées et les températures sont considérées pour une mise en oeuvre à pression atmosphérique.

Le procédé de fabrication selon l'invention consiste essentiellement à réaliser la pyrolyse laser d'une solution sol-gel comprenant de l'yttrium et du titane sous une forme appropriée.

Selon l'étape a), on dispose d'une solution précurseur dans laquelle les éléments métalliques yttrium et titane sont présents sous forme de composés qui sont des précurseurs moléculaires sol-gel hydrolysables.

Le précurseur d'yttrium et/ou le précurseur de titane contiennent également de l'oxygène destiné à entrer dans la composition de l'oxyde mixte.

Chaque précurseur est présent dans la solution précurseur à une concentration telle qu'il permet l'apport des éléments yttrium et titane selon le rapport stoechiométrique que ces éléments présentent dans la poudre carbonée et donc dans la poudre d'oxyde mixte d'yttrium et de titane.

Généralement, le précurseur de titane et/ou le précurseur d'yttrium sont choisis parmi un alcoxyde, un acétonate, un acétate, un carbonyle, un oxyalkyle ou leurs mélanges.

Préférentiellement, le précurseur d'yttrium est l'acétate d'yttrium et/ou le précurseur de titane est un alcoxyde de titane, choisi de préférence parmi le tétraisopropoxyde de titane, le butoxyde de titane ou leur mélange.

La solution précurseur de l'étape a) comprend également au moins un composé additionnel agissant en tant qu'absorbant d'un rayonnement laser et/ou solvant.

Les propriétés d'absorption du rayonnement laser et de solvatation peuvent ainsi être réunies dans au moins un même composé additionnel ou être apportées respectivement par au moins deux composés additionnels distincts.

Le composé additionnel agissant en tant que solvant est généralement un solvant polaire. Il solvate le précurseur d'yttrium qui est sous forme solide, et mène ainsi à une solution homogène comprenant les précurseurs d'yttrium et de titane. Il peut être choisi parmi un alcool, une cétone, un ester, un composé aromatique ou leurs mélanges, et plus particulièrement choisi parmi l'acétate d'éthyle, le xylène ou leur mélange.

Le composé additionnel agissant en tant qu'absorbant d'un rayonnement laser est choisi parmi un photosensibilisateur connu de l'homme du métier, tel que par exemple l'hexafluorure de soufre (SF₆), le méthane, l'éthylène ou leurs mélanges. Il absorbe le rayonnement laser, généralement à une longueur d'onde comprise entre 9,6 µm et 11 µm, plus particulièrement de 10,6 µm. L'énergie ainsi absorbée est ensuite spontanément transmise au milieu réactionnel dont la température s'élève alors afin d'en réaliser la pyrolyse.

Le composé additionnel contenu dans la solution précurseur peut également agir à la fois en tant qu'absorbant d'un rayonnement laser et solvant. Il est alors de préférence choisi parmi l'isopropanol, le butanol ou leur mélange.

La solution précurseur est agitée au cours de l'étape a) afin d'obtenir une solution sol-gel qui est soumise à une pyrolyse laser lors de l'étape b). Au cours de la pyrolyse laser, la solution sol-gel est portée à une température conduisant à la décomposition des précurseurs. Cette température est généralement comprise entre 700 °C et 1500 °C. Au-delà de cette gamme de température, un mélange biphasique d'une structure fluorine et d'une structure pyrochlore peut être obtenu de manière défavorable.

La pyrolyse laser est une méthode souple de synthèse de particules de taille inférieure au micromètre produisant des poudres de grande pureté, décrite par exemple dans la section « *Pyrolyse laser »* de la demande de brevet WO 2009/047423 [5]. Elle peut être réalisée en flux continu, afin d'obtenir des quantités importantes de poudre en vue de l'industrialisation du procédé de fabrication de l'invention.

La pyrolyse laser repose sur l'interaction d'un flux d'aérosol contenant un ou plusieurs précurseurs des particules à synthétiser avec un faisceau laser de forte puissance, généralement un faisceau laser CO₂. Le faisceau laser émet à une longueur d'onde résonnante avec une bande d'absorption d'une molécule présente dans le milieu réactionnel. L'énergie laser ainsi absorbée est ensuite transmise par transfert collisionnel au milieu réactionnel, ce qui aboutit à la décomposition thermique des précurseurs. En raison d'une instabilité thermodynamique de l'aérosol formant une vapeur dite « sursaturée », une germination homogène se produit, suivie par une croissance par coalescence de particules. Le temps d'interaction très court entre le flux de précurseurs et le faisceau laser qui l'intercepte provoque un phénomène de trempe très rapide qui bloque la croissance des grains initiée dans le faisceau, ce qui aboutit à l'obtention de particules.

Préférentiellement, la pyrolyse laser réalisée au cours de l'étape b) du procédé de fabrication de l'invention est menée à une pression comprise entre 300 mbar et 950 mbar, afin de favoriser une taille réduite des grains de la poudre carbonée et donc de la poudre d'oxyde mixte.

À l'issue de la pyrolyse laser de la solution sol-gel, une poudre carbonée, dont les grains forment chacun un noyau d'oxyde mixte recouvert d'une couche de carbone, est obtenue. Dans la présente description de l'invention, l'expression « poudre carbonée d'oxyde mixte d'yttrium et de titane » désigne une poudre composée de grains d'oxyde mixte d'yttrium et de titane, ces grains étant recouverts d'une couche de carbone.

La couche de carbone a généralement une épaisseur moyenne comprise entre 1 nm et 2 nm.

De préférence, elle recouvre la totalité de la surface de chacun des grains d'oxyde mixte d'yttrium et de titane.

De par la présence de la couche de carbone, la poudre carbonée constitue un produit intermédiaire pour obtenir la poudre d'oxyde mixte. Afin de supprimer la couche de carbone afin qu'elle s'oxyde en monoxyde ou dioxyde de carbone, dans le but d'obtenir une poudre d'oxyde mixte d'yttrium et de titane, le procédé de fabrication de l'invention comprend une étape c) au cours laquelle on réalise un traitement thermique supplémentaire dans une atmosphère oxydante vis-à-vis du carbone.

L'atmosphère oxydante comprend par exemple de l'air ou de l'oxygène.

Le traitement thermique supplémentaire est généralement réalisé à une température comprise entre 300 °C et 500 °C. Afin d'obtenir un bon degré de pureté, il doit être réalisé jusqu'à l'obtention de la poudre d'oxyde mixte d'yttrium et de titane, sa poursuite au-delà de cette obtention n'étant toutefois pas rédhibitoire. Néanmoins, il est généralement suffisant que le traitement thermique supplémentaire soit réalisé pendant une durée comprise entre 60 minutes et 180 minutes.

À l'issue du traitement thermique supplémentaire, une poudre d'oxyde mixte d'yttrium et de titane est obtenue, dans laquelle l'yttrium et le titane forment une solution solide.

Les grains de la poudre d'oxyde mixte comprennent par exemple Y₂Ti₂O₇, YTi₂O₅ ou leur mélange ; préférentiellement la structure pyrochlore Y₂Ti₂O₇.

Préférentiellement, les grains de la poudre d'oxyde mixte ont une structure monophasique, à savoir qu'ils sont composés d'une seule phase cristalline, de préférence de structure pyrochlore Y₂Ti₂O₇.

Généralement, le procédé de fabrication de l'invention permet d'obtenir une poudre d'oxyde mixte dont la taille moyenne des grains est comprise entre 10 nm et 400 nm, préférentiellement entre 10 nm et 80 nm afin de constituer une nanopoudre.

De préférence, une nanopoudre d'oxyde mixte est donc fabriquée par le procédé de l'invention.

Dans la présente description de l'invention, on entend désigner par « taille moyenne » la valeur moyenne du diamètre des particules lorsqu'elles sont substantiellement sphériques, ou la valeur moyenne de leur plus grande dimension lorsqu'elles ne sont pas substantiellement sphériques.

La taille moyenne peut être mesurée à l'aide d'une technique connue de l'homme du métier telle que la Microscopie Electronique en Transmission (MET) ou la méthode de Scherrer exploitant la largeur à mi-hauteur des raies de diffraction X.

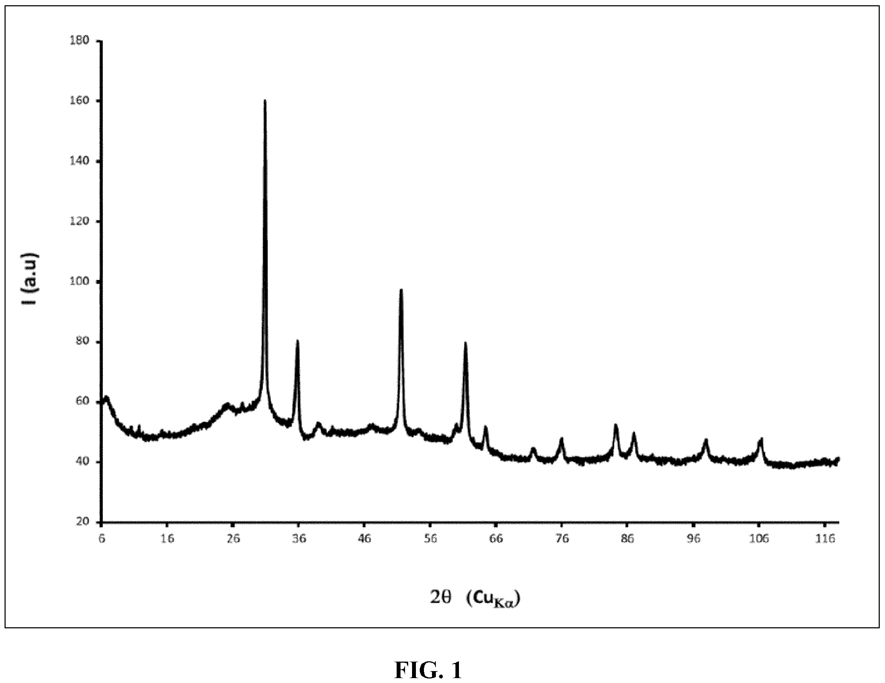

D'autres objets, caractéristiques et avantages de l'invention vont maintenant être précisés dans la description qui suit de modes de réalisation particuliers du procédé de fabrication de l'invention, donnés à titre illustratif et non limitatif, en référence aux Figures 1 à 3 annexées.

### BREVE DESCRIPTION DES FIGURES

Les figures représentent le diffractogramme de rayons X (Figure 1) et les clichés MET (Figures 2 et 3) résultant de l'analyse d'une poudre de structure pyrochlore obtenue par le procédé de fabrication de l'invention.

### EXPOSE DE MODES DE REALISATION PARTICULIERS

10 g de tétraisopropoxyde de titane liquide et 9 g d'une poudre d'acétate d'yttrium en tant que précurseurs sont mélangés à 300 ml d'isopropanol agissant en tant qu'absorbant d'un rayonnement laser et solvant. Le rapport massique entre le précurseur de titane et le précurseur d'yttrium permet d'introduire le même nombre de moles d'yttrium et de titane dans le solvant afin de viser le rapport stoechiométrique égal à 1 de la phase pyrochlore.

La solution précurseur obtenue est agitée pendant 1 heure avec un barreau magnétique afin d'aboutir à une solution sol-gel.

La solution sol-gel est nébulisée sous forme d'un aérosol. La nébulisation est réalisée à l'aide d'une pastille piézoélectrique dont les ondes ultrasonores émises induisent un phénomène de cavitation aboutissant à la formation de gouttelettes. Un débit de 4 litres/minutes d'un gaz porteur constitué d'argon conduit l'aérosol formé au travers d'une buse d'injection de section rectangulaire 10 x 27 mm² insérés au centre d'une buse de confinement de section rectangulaire 22 x 39 mm². Un gaz inerte tel que l'argon est injecté dans l'espace situé entre la buse d'injection et la buse de confinement afin de créer un flux gazeux de confinement autour de la flamme de pyrolyse.

Le flux de gouttelettes débouche ensuite dans une chambre de pyrolyse comprenant une atmosphère d'argon à la pression de 900 mbar. Il entre alors en interaction avec un faisceau émis par un laser d'une puissance de 2600 W et d'une longueur d'onde de 10,6 µm. La tache focale du faisceau présente une section de 10 x 30 mm². Dans ces conditions, le flux absorbe une énergie de 174 W.

Après 1 heure de pyrolyse laser, on obtient 11 g d'une poudre carbonée constituée de grains d'oxyde mixte d'yttrium et de titane recouverts d'une couche de carbone. L'épaisseur moyenne de la couche de carbone est de 1 nm.

La poudre carbonée est ensuite soumise à un traitement thermique supplémentaire sous air à 500 °C pendant 1 heure. Ce traitement supprime la couche de carbone afin qu'elle s'oxyde en monoxyde de carbone ou dioxyde de carbone. Il conduit à l'obtention de 10 g d'une poudre d'oxyde mixte d'yttrium et de titane.

Le diffractogramme de la poudre d'oxyde mixte est illustré par la Figure 1. Il présente des pics de diffraction correspondant à la seule structure pyrochlore Y₂Ti₂O₇, confirmant l'absence de phase secondaire et la pureté de la poudre. La taille moyenne des grains calculée à l'aide de la méthode de Scherrer est de 20 nm.

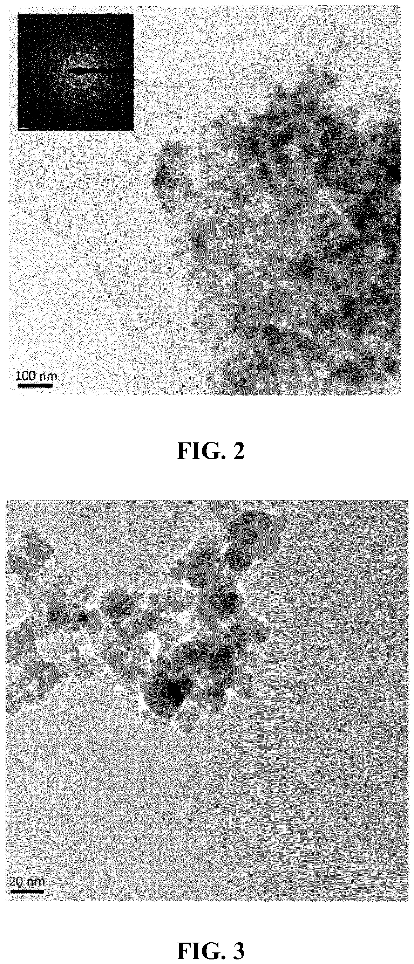

Les clichés MET représentés sur les Figures 2 et 3 indiquent que cette poudre est une poudre dont les grains de forme substantiellement sphérique ont une taille moyenne généralement inférieure à 20 nm.

Il ressort de la description qui précède que le procédé de l'invention permet de fabriquer une poudre d'oxyde mixte d'yttrium et de titane de structure complexe présentant un bon degré de pureté, tout en accédant aux avantages de la pyrolyse laser qu'est la production en continu de poudre avec un rendement élevé.

### REFERENCES CITEES

[1] Chen et al., Préparation of Y2Ti2O7 Nanocrystal by Sol-Gel Method and its Characterization, Advanced Materials Research, 2010, Vol. 97-101, p. 2175-2179.
[2] Chen et al., Synthesis and characterization of pyrochlore-type yttrium titanate nanoparticles by modified sol-gel method, Bulletin of Materials Science, 2011, Vol. 34, No. 3., p. 429-434.
[3] JD Casey et al.; Journal of Material Sciences, 1987, vol. 22, p. 4307-4312.
[4] Maskrot et al.; Blue TiO2-x/SiO2 nanoparticles by laser pyrolysis, Journal of Nanoparticle Research, 2006, vol. 8, n° 3-4, p. 351-360.
[5] WO 2009/047423

## Revendications

1. Procédé de fabrication d'une poudre d'oxyde mixte d'yttrium et de titane, le procédé comprenant les étapes successives suivantes :
a) agitation d'une solution précurseur afin d'obtenir une solution sol-gel ; la solution précurseur comprenant un précurseur d'yttrium, un précurseur de titane et au moins un composé additionnel agissant en tant qu'absorbant d'un rayonnement laser et/ou solvant ; les précurseurs étant tels qu'au moins un d'entre eux contient l'élément oxygène et qu'ils sont présents dans la solution précurseur selon une concentration telle que le rapport molaire entre les éléments yttrium et titane correspond au rapport stoechiométrique de ces éléments dans ladite poudre d'oxyde mixte ;
b) pyrolyse laser de la solution sol-gel afin d'obtenir une poudre carbonée comprenant des grains d'oxyde mixte d'yttrium et de titane qui sont recouverts d'une couche de carbone ;
c) traitement thermique supplémentaire de ladite poudre carbonée dans une atmosphère oxydante vis-à-vis du carbone, afin de supprimer la couche de carbone et d'obtenir ladite poudre d'oxyde mixte.

2. Procédé de fabrication d'une poudre selon la revendication 1, dans lequel le précurseur de titane et/ou le précurseur d'yttrium sont choisis parmi un alcoxyde, un acétonate, un acétate, un carbonyle, un oxyalkyle ou leurs mélanges.

3. Procédé de fabrication d'une poudre selon la revendication 2, dans lequel le précurseur d'yttrium est l'acétate d'yttrium.

4. Procédé de fabrication d'une poudre selon la revendication 2 ou 3, dans lequel le précurseur de titane est un alcoxyde de titane.

5. Procédé de fabrication d'une poudre selon la revendication 4, dans lequel l'alcoxyde de titane est choisi parmi le tétraisopropoxyde de titane, le butoxyde de titane ou leur mélange.

6. Procédé de fabrication d'une poudre selon l'une quelconque des revendications précédentes, dans lequel le composé additionnel agissant en tant que solvant est choisi parmi un alcool, une cétone, un ester, un composé aromatique ou leurs mélanges.

7. Procédé de fabrication d'une poudre selon la revendication 6, dans lequel le composé additionnel agissant en tant que solvant est choisi parmi l'acétate d'éthyle, le xylène ou leur mélange.

8. Procédé de fabrication d'une poudre selon l'une quelconque des revendications précédentes, dans lequel le composé additionnel agissant en tant qu'absorbant d'un rayonnement laser est choisi parmi l'hexafluorure de soufre, le méthane, l'éthylène ou leurs mélanges.

9. Procédé de fabrication d'une poudre selon l'une quelconque des revendications précédentes, dans lequel le composé additionnel agissant en tant qu'absorbant d'un rayonnement laser et solvant est choisi parmi l'isopropanol, le butanol ou leur mélange.

10. Procédé de fabrication d'une poudre selon l'une quelconque des revendications précédentes, dans lequel la pyrolyse laser porte la solution sol-gel à une température comprise entre 700 °C et 1500 °C.

11. Procédé de fabrication d'une poudre selon l'une quelconque des revendications précédentes, dans lequel la pyrolyse laser est menée à une pression comprise entre 300 mbar et 950 mbar.

12. Procédé de fabrication d'une poudre selon l'une quelconque des revendications précédentes, dans lequel la couche de carbone a une épaisseur moyenne comprise entre 1 nm et 2 nm.

13. Procédé de fabrication d'une poudre selon l'une quelconque des revendications précédentes, dans lequel le traitement thermique supplémentaire est réalisé à une température comprise entre 300 °C et 500 °C.

14. Procédé de fabrication d'une poudre selon l'une quelconque des revendications précédentes, dans lequel le traitement thermique supplémentaire est réalisé pendant une durée comprise entre 60 minutes et 180 minutes.

15. Procédé de fabrication d'une poudre selon l'une quelconque des revendications précédentes, dans lequel les grains de ladite poudre d'oxyde mixte comprennent Y₂Ti₂O₇, YTi₂O₅ ou leur mélange.

16. Procédé de fabrication d'une poudre selon l'une quelconque des revendications précédentes, dans lequel les grains de ladite poudre d'oxyde mixte ont une structure monophasique.

17. Procédé de fabrication d'une poudre selon l'une quelconque des revendications précédentes, dans lequel les grains de ladite poudre d'oxyde mixte ont une taille moyenne comprise entre 10 nm et 400 nm.

18. Procédé de fabrication d'une poudre selon la revendication 17, dans lequel les grains de ladite poudre d'oxyde mixte ont une taille moyenne comprise entre 10 nm et 80 nm.

## Patentansprüche

1. Verfahren zur Herstellung eines Pulvers aus Yttrium- und Titanmischoxid, wobei das Verfahren die folgenden sukzessiven Schritte umfasst:
a) Rühren einer Vorläuferlösung, um eine Sol-Gel-Lösung zu erhalten; wobei die Vorläuferlösung einen Yttrium-Vorläufer, einen Titan-Vorläufer und mindestens eine zusätzliches Verbindung umfasst, die als Absorptionsmittel eines Laserstrahls und/oder Lösemittels wirkt, wobei die Vorläufer derart sind, dass mindestens einer unter ihnen das Element Sauerstoff enthält, und dass sie in der Vorläuferlösung in einer derartigen Konzentration vorhanden sind, dass das Molverhältnis zwischen den Elementen Yttrium und Titan dem stöchiometrischen Verhältnis dieser Elemente in dem Pulver aus Mischoxid entspricht;
b) Laserpyrolyse der Sol-Gel-Lösung, um ein kohlenstoffhaltiges Pulver zu erhalten, umfassend Körner aus Yttrium- und Titanmischoxid, die mit einer Kohlenstoffschicht bedeckt sind
c) zusätzliche thermisches Behandeln des kohlenstoffhaltigen Pulvers in einer gegenüber dem Kohlenstoff oxidierenden Atmosphäre, um die Kohlenstoffschicht zu beseitigen und das Pulver aus Mischoxid zu erhalten.

2. Verfahren zur Herstellung eines kohlenstoffhaltigen Pulvers nach Anspruch 1, wobei der Titan-Vorläufer und/oder der Yttrium-Vorläufer ausgewählt sind aus einem Alkoxid, einem Acetonat, einem Acetat, einem Carbonyl, einem Oxyalkyl oder ihren Mischungen.

3. Verfahren zur Herstellung eines Pulvers nach Anspruch 2, wobei der Yttrium-Vorläufer Yttriumacetat ist.

4. Verfahren zur Herstellung eines kohlenstoffhaltigen Pulvers nach Anspruch 2 oder 3, wobei der Titan-Vorläufer ein Titanalkoxid ist.

5. Verfahren zur Herstellung eines Pulvers nach Anspruch 4, wobei das Titanalkoxid ausgewählt ist aus Titantetraisopropoxyd, Titanbutoxid oder ihrem Mischung.

6. Verfahren zur Herstellung eines Pulvers nach einem beliebigen der vorhergehenden Ansprüche, wobei die zusätzliche Verbindung, die als Lösemittel wirkt, ausgewählt ist aus einem Alkohol, einem Ceton, einem Ester, einer aromatischen Verbindung und ihren Mischungen.

7. Verfahren zur Herstellung eines Pulvers nach Anspruch 6, wobei die zusätzliche Verbindung, die als Lösemittel wirkt, ausgewählt ist aus Ethylacetat, Xylen oder ihrer Mischung.

8. Verfahren zur Herstellung eines Pulvers nach einem beliebigen der vorhergehenden Ansprüche, wobei die zusätzliche Verbindung, die als Absorptionsmittel eines Laserstrahls wirkt, ausgewählt ist aus Schwefelhexafluorid, Methan, Ethylen oder ihren Mischungen.

9. Verfahren zur Herstellung eines Pulvers nach einem beliebigen der vorhergehenden Ansprüche, wobei die zusätzliche Verbindung, die als Absorptionsmittel eines Laserstrahls und Lösemittels wirkt, ausgewählt ist aus Isopropanol, Butanol oder ihrer Mischung.

10. Verfahren zur Herstellung eines kohlenstoffhaltigen Pulvers nach einem beliebigen der vorhergehenden Ansprüche, wobei die Laserpyrolyse die Sol-Gel-Lösung auf eine Temperatur bringt, die im Bereich zwischen 700 °C und 1500 °C liegt.

11. Verfahren zur Herstellung eines Pulvers nach einem beliebigen der vorhergehenden Ansprüche, wobei die Laserpyrolyse bei einem Druck durchgeführt wird, der im Bereich zwischen 300 mbar und 950 mbar liegt.

12. Verfahren zur Herstellung eines Pulvers nach einem beliebigen der vorhergehenden Ansprüche, wobei die Kohlenstoffschicht eine mittlere Dichte aufweist, die im Bereich zwischen 1 nm und 2 nm liegt.

13. Verfahren zur Herstellung eines Pulvers nach einem beliebigen der vorhergehenden Ansprüche, wobei die zusätzliche thermische Behandlung bei einer Temperatur durchgeführt wird, die im Bereich zwischen 300 °C und 500 °C liegt.

14. Verfahren zur Herstellung eines Pulvers nach einem beliebigen der vorhergehenden Ansprüche, wobei die zusätzliche thermische Behandlung während einer Dauer durchgeführt wird, die im Bereich zwischen 60 Minuten und 180 Minuten liegt.

15. Verfahren zur Herstellung eines Pulvers nach einem bleibigen der vorhergehen Ansprüche, wobei die Körner des Pulvers aus Mischoxid Y₂Ti₂O₇, YTi₂O₅ oder ihre Mischungen umfassen.

16. Verfahren zur Herstellung eines Pulvers nach einem beliebigen der vorhergehenden Ansprüche, wobei die Körner des Pulvers aus Mischoxid eine monophasige Struktur aufweisen.

17. Verfahren zur Herstellung eines Pulvers nach einem beliebigen der vorhergehenden Ansprüche, wobei die Körner des Pulvers aus Mischoxid eine mittlere Größe aufweisen, die im Bereich zwischen 10 nm und 400 nm liegt.

18. Verfahren zur Herstellung eines Pulvers nach Anspruch 17, wobei die Körner des Pulvers aus Mischoxid eine mittlere Größe aufweisen, die im Bereich zwischen 10 nm und 80 nm liegt.

## Claims

1. Process for manufacturing a powder of mixed yttrium and titanium oxide, the process comprising the following successive steps:
a) agitating a precursor solution to obtain a sol-gel solution; the precursor solution comprising a precursor of yttrium, a precursor of titanium and at least one additional compound acting as absorbent of laser radiation and/or solvent; the precursors being such that at least one thereof contains the element oxygen and they are contained in the precursor solution in a concentration such that the molar ratio between the yttrium and titanium elements corresponds to the stoichiometric ratio of these elements in said mixed oxide powder;
b) laser pyrolysis of the sol-gel solution to obtain a carbon powder comprising grains of mixed ytrrium and titanium oxide coated with a carbon layer;
c) additional heat treatment of said carbon powder in an carbon-oxidizing atmosphere, to remove the carbon layer and obtain said mixed oxide powder.

2. The process for manufacturing a powder according to claim 1, wherein the precursor of titanium and/or the precursor of yttrium are selected from among an alkoxide, acetonate, acetate, carbonyl, oxyalkyl or mixtures thereof.

3. The process for manufacturing a powder according to claim 2, wherein the precursor of yttrium is yttrium acetate.

4. The process for manufacturing a powder according to claim 2 or 3, wherein the precursor of titanium is a titanium alkoxide.

5. The process for manufacturing a powder according to claim 4, wherein the titanium alkoxide is selected from among titanium tetraisopropoxide, titanium butoxide or mixture thereof.

6. The process for manufacturing a powder according to any of the preceding claims, wherein the additional compound acting as solvent is selected from among an alcohol, a ketone, an ester, an aromatic compound or mixtures thereof.

7. The process for manufacturing a powder according to claim 6, wherein the additional compound acting as solvent is selected from among ethyl acetate, xylene or mixture thereof.

8. The process for manufacturing a powder according to any of the preceding claims, wherein the additional compound acting as absorbent of laser radiation is selected from among sulfur hexafluoride, methane, ethylene or mixtures thereof.

9. The process for manufacturing a powder according to any of the preceding claims, wherein the additional compound acting as absorbent of laser radiation and solvent is selected from among isopropanol, butanol or mixture thereof.

10. The process for manufacturing a powder according to any of the preceding claims, wherein laser pyrolysis brings the sol-gel solution to a temperature of between 700 °C and 1500 °C.

11. The process for manufacturing a powder according to any of the preceding claims, wherein laser pyrolysis is conducted at a pressure of between 300 mbar and 950 mbar.

12. The process for manufacturing a powder according to any of the preceding claims, wherein the carbon layer has a mean thickness of between 1 nm and 2 nm.

13. The process for manufacturing a powder according to any of the preceding claims, wherein the additional heat treatment s performed at a temperature of between 300 °C and 500 °C.

14. The process for manufacturing a powder according to an of the preceding claims, wherein the additional heat treatment is conducted for a time of between 60 minutes and 180 minutes.

15. The process for manufacturing a powder according to any of the preceding claims, wherein the grains of said powder of mixed yttrium and titanium oxide comprise Y₂Ti₂O₇, YTi₂O₅ or mixture thereof.

16. The process for manufacturing a powder according to any of the preceding claims, wherein the grains of said mixed oxide powder have a single-phase structure.

17. The process for manufacturing a powder according to any of the preceding claims, wherein the grains of said mixed oxide powder have a mean size of between 10 nm and 400 nm.

18. The process for manufacturing a powder according to claim 17, wherein the grains of said mixed oxide powder have a mean size of between 10 nm and 80 nm.
